# EUROPÄISCHE PATENTSCHRIFT

(11) **EP 3 268 259 B1**
(45) Veröffentlichungstag und Bekanntmachung des Hinweises auf die Patenterteilung: **03.04.2019**
(21) Anmeldenummer: 16703992.4
(22) Anmeldetag: 12.02.2016
(51) Int. Cl.: B62D 1/184, B62D 1/185

(54) **VERSTELLBARE LENKSÄULE MIT VERBESSERTER STEIFIGKEIT**
ADJUSTABLE STEERING COLUMN HAVING IMPROVED RIGIDITY
COLONNE DE DIRECTION POSITIONNABLE À RIGIDITÉ AMÉLIORÉE

(30) Priorität: 09.03.2015 DE 102015002889
(43) Veröffentlichungstag der Anmeldung: 17.01.2018
(73) Patentinhaber: ThyssenKrupp Presta AG, 9492 Eschen (LI); thyssenkrupp AG, 45143 Essen (DE)
(72) Erfinder: GALEHR, Robert, 9486 Schaanwald (LI); SCHNITZER, Hieronymus, 9487 Gamprin (LI); SCHOLTEN, Michael, 6723 Blons (AT)
(74) Vertreter: thyssenkrupp Intellectual Property GmbH
(86) Internationale Anmeldenummer: PCT/EP2016/052953
(87) Internationale Veröffentlichungsnummer: WO 2016/142119

(56) Entgegenhaltungen:
- US-A1- 2005 173 914
- US-A1- 2012 006 141

## Beschreibung

Die vorliegende Erfindung betrifft eine Lenksäulenanordnung mit den Merkmalen des Oberbegriffs des Anspruchs 1.

Im Stand der Technik sind Lenksäulen für Kraftfahrzeuge bekannt, die verstellbar sind, um die Position des Lenkrads den Anforderungen unterschiedlicher Fahrer anpassen zu können. Für die axiale Verstellbarkeit der Lenksäule ist beispielsweise die EP 1 125 820 A2 bekannt, bei der im Wesentlichen zwei als Führungskasten und Führungsteil ausgebildete konzentrische Rohre ineinander teleskopartig beweglich sind. Zwischen den beiden Rohren ist eine Lagerung vorgesehen, die die axiale Verschieblichkeit gewährleistet. Die DE 10 2011 056 674 B3 offenbart eine Lenksäulenanordnung, bei der das Führungsteil und der Führungskasten jeweils Sicken aufweist, mit denen sie entlang einer Längsachse ineinander führbar gelagert sind. Die Sicken weisen als Durchgriffsöffnung jeweils ein Langloch auf, durch das ein Spannbolzen eines Klemmsystems hindurchgeführt ist. Das Dokument US2005/173914 wird als nächstliegender Stand der Technik angesehen und offenbart die Merkmale des Oberbegriffs des Anspruchs 1.

Es ist wünschenswert, dass die axiale Verstellung der Lenksäule für einen Fahrer leicht vorzunehmen ist und die Reibung zwischen dem Führungskasten und dem Führungsteil möglichst gering ist. Bei einer festgestellten bzw. arretierten Lenksäule ist es hingegen vorteilhaft, wenn die Reibung zwischen dem Führungskasten und dem Führungsteil hoch ist, um einen sicheren Halt zu gewährleisten. Die Halte- und Verschiebekraft der Lenksäule setzen somit verschiedene Anforderungen an die Reibung zwischen den Bauteilen voraus. Aus dem Stand der Technik ist eine Reihe technischer Lösungen bekannt, die Einfluss nehmen auf die Gleitreibung zwischen dem Führungskasten und dem Führungsteil.

Die US 2006/0117898 A1 offenbart eine Lenksäule, auf deren Mantelinnenfläche eine Hülse angeordnet ist, in deren Öffnung ein Füllmaterial injiziert wird, um die Mantelinnenfläche zu stützen.

Weiterhin offenbart die DE 10 2008 005 256 A1 eine Lenksäule mit einem inneren und äußeren Mantelrohr, zwischen denen eine Kunststoffhülse angeordnet ist. Die Kunststoffhülse weist Vorsprünge auf, die in Aussparungen der äußeren Mantelfläche greifen.

Aus der WO 2012/027762 A1 ist eine Lenksäule mit einem keilförmigen Körper bekannt, der mit einem elastischen Vorspannelement gegen ein Führungsteil gedrückt wird.

Keine der aus dem Stand der Technik bekannten Lenksäulen nimmt positiven Einfluss sowohl auf die Verschiebekraft als auch auf die Haltekraft.

Es ist daher Aufgabe der vorliegenden Erfindung, eine Lenksäulenanordnung für ein Kraftfahrzeug anzugeben, die in einem nicht arretierten Zustand leichtgängig verstellbar ist und die in einem arretierten Zustand eine hohe Steifigkeit aufweist.

Diese Aufgabe wird von einer Lenksäulenanordnung mit den Merkmalen des Anspruchs 1 gelöst. In den Unteransprüchen sind vorteilhafte Weiterbildungen der Erfindung genannt.

Weil die Lenksäulenanordnung für ein Kraftfahrzeug mit einem Führungsteil zur drehbaren Lagerung einer Lenkspindel um eine Längsachse, mit einem Führungskasten, das an dem Kraftfahrzeug montierbar ist, in dem das Führungsteil entlang der Längsachse verschiebbar angeordnet ist, mit einem Klemmsystem, das zur Arretierung des Führungsteils in dem Führungskasten ausgebildet ist und umschaltbar ist, zwischen einem arretierten Zustand der Lenksäulenanordnung, in dem das Führungsteil gegenüber dem Führungskasten in seiner Position fixiert ist und einem gelösten Zustand der Lenksäulenanordnung, in dem das Führungsteil gegenüber dem Führungskasten in Richtung der Längsachse verschiebbar ist, wobei erfindungsgemäß zwischen dem Führungskasten und dem Führungsteil wenigstens zwei Kontaktflächen vorgesehen sind, wobei im gelösten Zustand der Lenksäulenanordnung wenigstens eine erste Kontaktfläche in einem ersten Reibkontakt mit einer Oberfläche des Führungsteils steht, die einer Verschiebung des Führungsteils gegenüber dem Führungskasten entlang der Längsachse entgegenwirkt, und wobei im arretierten Zustand der Lenksäulenanordnung wenigstens eine zweite Kontaktfläche in einem zweiten Reibkontakt mit einer Oberfläche des Führungsteils steht, wobei eine als Haltekraft ausgebildete Reibkraft, die zwischen dem Führungskasten und dem Führungsteil im arretierten Zustand des Klemmsystems wirkt, und wobei ein erster Gleitreibungskoeffizient des ersten Reibkontaktes der wenigstens einen ersten Kontaktfläche kleiner ist als ein zweiter Gleitreibungskoeffizient des zweiten Reibkontaktes der wenigstens einen zweiten Kontaktfläche, ist eine sehr gute Verschiebbarkeit des Führungsteils gegenüber dem Führungskasten im gelösten Zustand der Lenksäulenanornung gewährleistet, während im arretierten Zustand eine hohe Steifigkeit erreicht ist.

In einer bevorzugten Ausführungsform ist die Differenz zwischen dem zweiten Gleitreibungskoeffizienten und dem ersten Gleitreibungskoeffizienten größer als 0,04. Weiterhin bevorzugt, ist die Differenz zwischen dem zweiten Gleitreibungskoeffizienten und dem ersten Gleitreibungskoeffizienten größer als 0,07. Dabei ist es besonders bevorzugt, wenn die Differenz zwischen dem zweiten Gleitreibungskoeffizienten und dem ersten Gleitreibungskoeffizienten größer als 0,10 ist. Vorteilhafterweise ist die Differenz zwischen dem zweiten Gleitreibungskoeffizienten und dem ersten Gleitreibungskoeffizienten größer als 0,13.

Dabei ist es zu bevorzugen, wenn die Differenz der Gleitreibungskoeffizienten kleiner oder gleich 0,2 ist.

Bevorzugt liegt die Differenz zwischen dem zweiten Gleitreibungskoeffizienten und dem ersten Gleitreibungskoeffizienten in einem Bereich zwischen 0,04 und 0,2.

In einer vorteilhaften Ausführungsform weist der Führungskasten wenigstens eine Ausnehmung zur Aufnahme von einem Zwischenelement auf, wobei das Zwischenelement auf einer Innenseite des Führungskastens die wenigstens eine erste Kontaktfläche und/oder die wenigstens eine zweite Kontaktfläche bildet. Vorzugsweise ist die Ausnehmung eine Durchgriffsöffnung.

Weiterhin kann vorteilhafterweise vorgesehen sein, dass die wenigstens eine erste Kontaktfläche und/oder die wenigstens eine zweite Kontaktfläche durch eine Gleitbeschichtung des Führungskastens auf einer Innenseite gebildet ist. Hierzu kann beispielsweise ein Gleitlack eingesetzt werden.

In einer bevorzugten Ausführungsform ist wenigstens eine erste Kontaktfläche in einem Endbereich des Führungskastens zwischen einem lenkradseitigen Ende und dem Klemmsystem in einem Bereich einer Unterseite des Führungskastens liegend angeordnet. Weiterhin bevorzugt ist wenigstens eine zweite Kontaktfläche in einem Endbereich des Führungskastens zwischen einem lenkradseitigen Ende und dem Klemmsystem in einem Bereich einer Oberseite des Führungskastens liegend angeordnet. Vorteilhafterweise ist wenigstens eine erste Kontaktfläche in einem Bereich einer Oberseite des Führungskastens auf einer lenkradfernen Seite des Klemmsystems liegend angeordnet. Weiterhin bevorzugt ist wenigstens eine zweite Kontaktfläche in einem Bereich einer Unterseite des Führungskastens auf einer lenkradfernen Seite des Klemmsystems liegend angeordnet.

Die Lenksäulenanordnung kann vorzugweise durch ein inneres Mantelrohr und durch ein äußeres Mantelrohr gebildet sein oder durch ein Führungsteil mit wenigstens einer Führungsteilsicke und einem Führungskasten mit wenigstens einer in die wenigstens eine Führungsteilsicke greifende Führungskastensicke, die eine Führung des Führungsteils entlang der Längsachse in dem Führungskasten ermöglicht, und wobei die wenigstens eine Führungsteilsicke und die wenigstens eine Führungskastensicke mit einer Durchführöffnung zum Hindurchführen eines Spannbolzen des Klemmsystem versehen sind.

Besonders bevorzugt umfasst die erfindungsgemäße Lenksäulenanordnung ein Konsolenteil, das zur Befestigung des Führungskastens an einer Karossiere des Kraftfahrzeugs ausgebildet ist. Hierdurch kann neben der Verstellbarkeit in Richtung der Längsachse der Lenksäulenanordnung auch eine Verstellbarkeit in einer Höhenrichtung oder in eine Schwenkrichtung einfach dargestellt werden.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung der Krafteinwirkung zwischen einem Führungsteil und einem Führungskasten einer Lenksäule,
- Fig. 2:: eine räumliche Darstellung einer Lenksäulenanordnung mit einem inneren und einem äußerem Mantelrohr,
- Fig. 3:: eine zweite räumliche Ansicht einer Lenksäulenanordnung gemäß Figur 2,
- Fig. 4:: eine dritte räumliche Ansicht einer Lenksäulenanordnung gemäß Figur 2,
- Fig. 5:: eine räumliche Darstellung der teilweise geschnittenen Mantelrohre mit einem Zwischenelement der Lenksäulenanordnung gemäß Figur 2,
- Fig. 6:: einen Querschnitt durch das Führungsteil der Lenksäulenanordnung gemäß Figur 2 und den Führungskasten in einem Bereich zwischen einem Klemmsystem und einem lenkradseitigen Ende,
- Fig. 7:: eine vergrößerte Ansicht gemäß Figur 6 des zwischen dem Führungsteil und dem Führungskasten angeordneten Zwischenelements,
- Fig. 8:: eine räumliche Darstellung eines Zwischenelements,
- Fig. 9:: eine räumliche Darstellung eines weiteren Zwischenelements,
- Fig. 10:: eine Ansicht eines Führungskastens mit mehreren Kontaktflächen gemäß Figur 2,
- Fig. 11:: eine zweite Ansicht des Führungskastens aus Fig. 10,
- Fig. 12:: eine weitere Ansicht des Führungskastens aus Fig. 10,
- Fig. 13:: eine räumliche Ansicht des teilweise geschnittenen Führungskastens aus Fig. 10,
- Fig. 14:: eine weitere Ausführungsform der Erfindung in einer räumlichen Ansicht einer ersten Hälfte eines Führungskastens analog zur Ausführungsform gemäß der Figur 2,
- Fig. 15:: eine weitere Ausführungsform der Erfindung in einer räumlichen Ansicht einer zweiten Hälfte des Führungskastens aus Fig. 14, sowie
- Fig. 16:: eine weitere Ausführungsform der Erfindung analog zur Figur 15 in einer räumlichen Ansicht einer zweiten Hälfte eines Führungskastens.

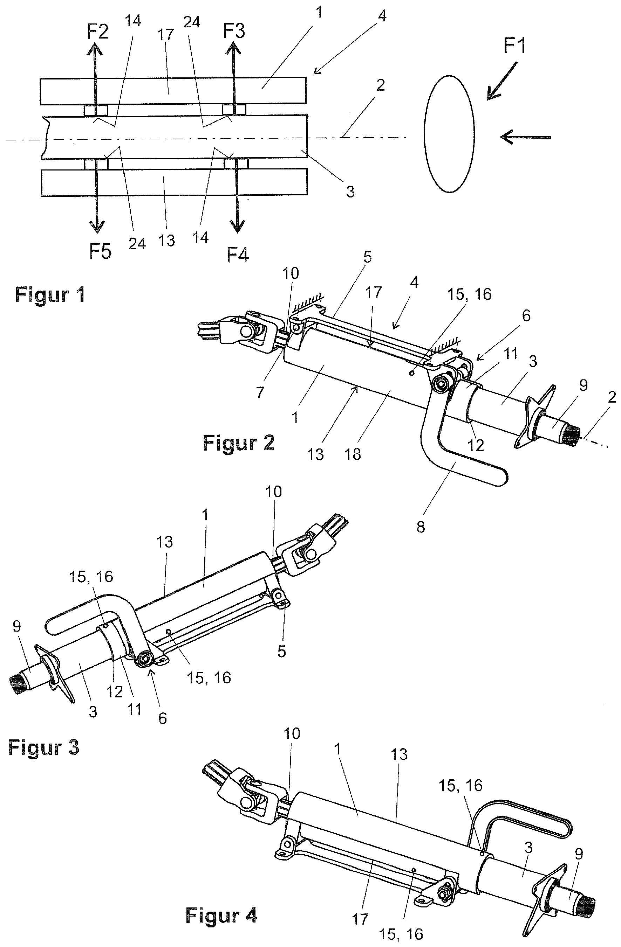

In der Figur 1 ist schematisch dargestellt, welche Reibungskräfte zwischen einem Führungskasten 1 und einem darin verschiebbar entlang einer Längsachse 2 gelagerten Führungsteil 3 bei der Verstellung der Lenksäule 4 und im Crashfall bzw. im arretierten Zustand der Lenksäule 4 wirken. Eine Verschiebekraft F1 wird von einem Fahrer auf das Lenkrad zur Verstellung der Lenksäule 4 entlang der Längsachse 2 im nicht arretierten Zustand der Lenksäule 4 aufgebracht. Die Verschiebekraft F1 erfolgt unter einem spitzen Winkel zur Längsachse 2. Hier ist ein Winkel von etwa 45 Grad exemplarisch dargestellt. Die Verschiebekraft F1 erzeugt zwei entgegengesetzt senkrecht zur Längsachse 2 wirkende Kräfte F4 und F2, die das Führungsteil 3 gegen den Führungskasten 1 an den Kontaktflächen 14 drücken. Im Crashfall bzw. im arretierten Zustand der Lenksäule 4 wirken die entgegengesetzten Reibungskräfte F3 und F5 senkrecht zur Längsachse 2 an den Kontaktflächen 24.

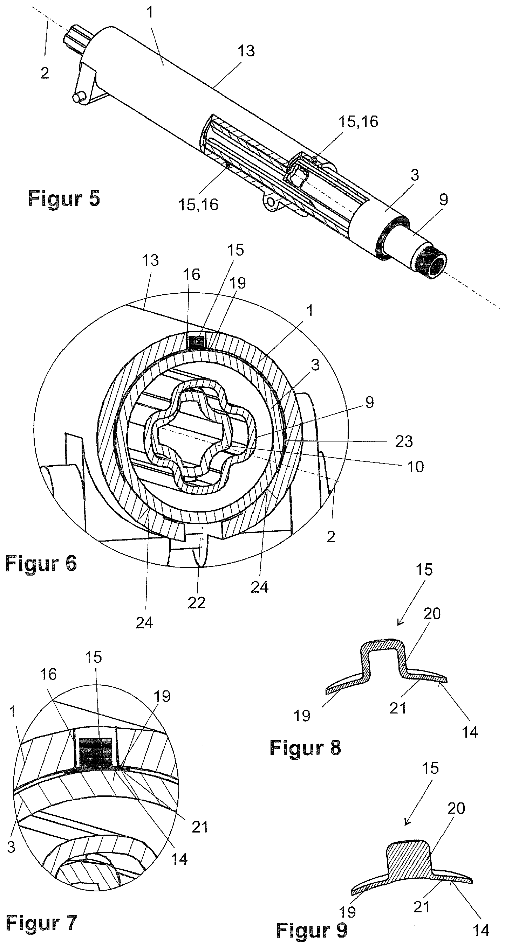

Die Figuren 2 bis 4 zeigen perspektivisch eine Lenksäulenanordnung 4 für ein Kraftfahrzeug mit einer Konsole 5 zur karosseriefesten Befestigung. Die Figuren 5 bis 13 zeigen verschiedene Details dieser Lenksäulenanordnung 4. Die Konsole 5 trägt ein Klemmsystem 6 zur Halterung des Führungskastens 1 sowie ein Schwenklager 7, in dem das Führungsteil 3 gelagert ist. Der Führungskasten 1 und das Führungsteil 3 sind konzentrisch zueinander mit einer gemeinsamen Zentralachse, die mit der Längsachse 2 der Lenkspindel zusammenfällt, angeordnet. Der Führungskasten 1 und das Führungsteil 3 sind im Wesentlichen rohrförmig ausgebildet. In dieser Anordnung spricht man auch von einem äußeren Mantelrohr 1 und einem inneren Mantelrohr 3. Ein Verstellhebel 8 dient zur Betätigung des Klemmsystems 6. Im Inneren des inneren Mantelrohrs 3 ist die Lenkspindel 9 bzw. eine mit der Lenkspindel verbundene Lenkwelle 10 drehbar gelagert. In einem Endbereich 11 des äußeren Mantelrohrs 1 zwischen einem lenkradseitigen Ende 12 und dem Klemmsystem 6 ist auf einer von der Konsole 5 abgewandten Unterseite 13 des äußeren Mantelrohrs 1 eine erste Kontaktfläche 14 vorgesehen. Die eine erste Kontaktfläche 14 wird von einem Zwischenelement 15 gebildet, welches in einer ersten Durchgriffsöffnung 16 des äußeren Mantelrohrs 1 angeordnet ist. Die erste Kontaktfläche 14 liegt auf der Innenseite des äußeren Mantelrohrs 1. Zwei weitere erste Kontaktflächen 14 sind auf einer zwischen Längsachse 2 und Konsole 5 angeordneten Oberseite 17 des äußeren Mantelrohrs 1 auf einer lenkradfernen Seite 18 des Klemmsystems 6 symmetrisch zur Längsachse 2 angeordnet. Diese beiden weiteren ersten Kontaktflächen 14 sind ebenfalls in einer Durchgriffsöffnung 16 im äußeren Mantelrohr 1 und einem darin angeordneten Zwischenelement 15 gebildet. Die ersten Kontaktflächen 14 stehen im geöffneten Zustand der Lenksäulenanordnung 4 mit der äußeren Oberfläche des Führungsteils 3 in Kontakt und liegen somit im Kraftfluss der Verschiebekraft F1 und den daraus resultierenden Kräften F2 und F4 und weisen daher bevorzugt eine niedrige Reibung auf.

Die Anordnung und Ausgestaltung der Zwischenelemente 15 ist detailliert in den Figuren 5 bis 9 dargestellt. Die Zwischenelemente 15 sind zylinderförmig mit einem am Ende angeordneten Kragen 19 ausgestaltet. Die Größe des Zylinders ist auf die Durchgriffsöffnungen 16 abgestimmt. Der zylinderförmige Bereich 20 des Zwischenelements 15 ist im eingebauten Zustand in der Durchgriffsöffnung 16 aufgenommen und der Kragen 19 ist zwischen dem Führungskasten 1 und dem Führungsteil 3 positioniert. Die zylinderferne Seite 21 des Kragens 19 bildet die Kontaktfläche 14. Wie in der Figur 6 zu sehen ist, ist die an der Unterseite 13 angeordnete Durchgriffsöffnung 16 auf der gegenüberliegenden Seite von einem sich in Längsrichtung von dem lenkradseitigen Ende erstreckenden Ausschnitt 22 des Führungskastens 1 angeordnet. Der Ausschnitt 22, der im Beispiel als Schlitz ausgebildet ist, ist Teil des Klemmsystems 6. Der Kragen 19 erstreckt sich zwischen dem Führungsteil 3 und dem Führungskasten 1 und verläuft im Beispiel spiegelsymmetrisch in Umfangsrichtung. In einer bevorzugten Ausführungsform sind die ersten Kontaktflächen 14 mit einer Gleitbeschichtung versehen. In einer weiteren bevorzugten Ausführungsform werden die ersten Kontaktflächen durch eine Gleitbeschichtung des Führungsastens auf der Innenseite 23 gebildet.

Zwei zweite Kontaktflächen 24 sind im Beispiel auf der gegenüberliegenden Seite von der einen ersten Kontaktfläche 14 auf der Oberseite 17 des Führungskastens 1, auf jeweils einer Seite in Umfangsrichtung neben dem Ausschnitt 22 liegend, angeordnet. Diese zweiten Kontaktflächen 24 stehen im arretierten Zustand der Lenksäulenanordnung 4 mit der äußeren Oberfläche des Führungsteils 3 in Kontakt und liegen somit im Kraftfluss der Haltekraft F3, F5 und weisen im Kontakt eine hohe Reibung auf. In einer Ausführungsform können diese zweiten Kontaktflächen 24 durch eine Beschichtung auf einer Innenseite 23 des Führungskastens 1 gebildet sein.

Das Zwischenelement 15 kann wie in den Figur 8 dargestellt, als einseitig geschlossener Hohlzylinder oder, wie in Figur 9 dargestellt, als Vollzylinder ausgestaltet sein. Der Kragen 19 ist vorzugsweise kreisförmig ausgeformt und weist einen Durchmesser auf, der deutlich größer ist als der Durchmesser der Durchgriffsöffnungen 16. Das Zwischenelement 15 kann aus Folie, Blech oder Kunststoff hergestellt werden. Bevorzugt wird das Zwischenelement 15 aus Kunststoff im Spritzgussverfahren gefertigt.

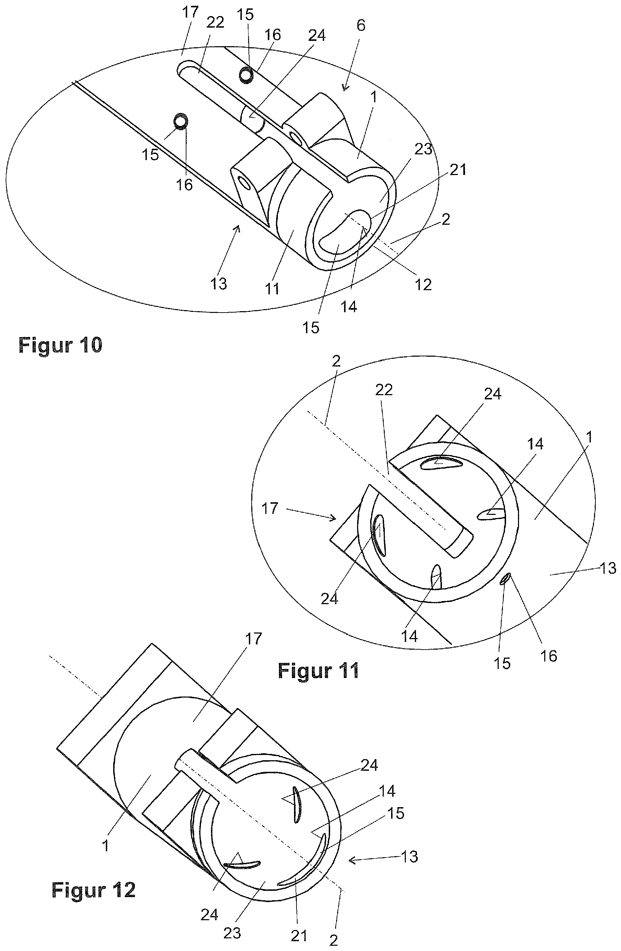

In den Figuren 10 bis 13 sind vorteilhafte Anordnungen der ersten und zweiten Kontaktflächen 14, 24 auf der Innenseite 23 eines Führungskastens 1 für die Lenksäulenanordnung entsprechend Figur 1 veranschaulicht.

Figur 10 zeigt einen Führungskasten 1 in einer Ansicht auf die Oberseite 17. Die erste Kontaktfläche 14 ist in dem Endbereich 11 des Führungskastens auf der von der Konsole 5 abgewandten Unterseite 13 des Führungskastens 1 vorgesehen. Diese erste Kontaktfläche 14 ist aus dem in die Durchgriffsöffnung 16 des Führungskastens 1 angeordneten Zwischenelement 15 gebildet und weist eine geringe Reibung auf. Auf der gegenüberliegenden Seite sind die zwei zweiten Kontaktflächen 24 auf der Innenseite 23 des Führungskastens 1 angeordnet (vergleiche Figur 11) und weisen eine hohe Reibung auf. Die beiden weiteren ersten Kontaktflächen 14 sind auf der konsolennahen Oberseite 17 des Führungskastens 1 auf der lenkradfernen Seite des Klemmsystems 6, jeweils auf einer Seite des Ausschnitts 22 des Führungskastens 1 in Umfangsrichtung liegend, angeordnet. Diese beiden ersten Kontaktflächen 14 sind, wie bereits beschrieben, jeweils durch ein in eine Durchgriffsöffnung 16 eingreifendes Zwischenelement 15 gebildet und weisen eine geringe Reibung auf. Gegenüberliegend von diesen beiden ersten Kontaktflächen 14 sind zwei weitere zweite Kontaktflächen 24, wie in Figur 12 dargestellt, angeordnet. Diese gepaarten zweiten Kontaktflächen 24 sind symmetrisch zur Längsachse 2 auf der Innenseite 23 des Führungskastens 1 im Bereich der Unterseite 13 angeordnet und weisen eine hohe Reibung auf. Die hohe Reibung kann durch eine Beschichtung auf der Innenseite 23 des Führungskastens 1 gebildet sein.

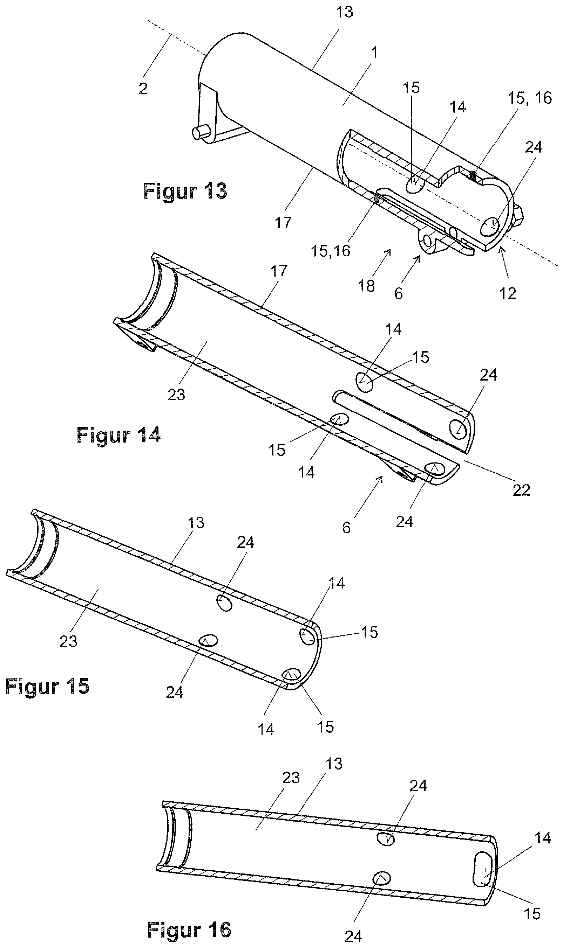

Figur 15 zeigt eine alternative Anordnung der Kontaktflächen auf der Innenseite 23 des Führungskastens 1 im Bereich der Unterseite 13. Die erste Kontaktfläche 14 ist gepaart mit einer weiteren ersten Kontaktfläche 14 angeordnet, die ebenfalls durch ein Zwischenelement 15 mit niedriger Reibung gebildet ist. Die beiden ersten Kontaktflächen 14 weisen eine geringe Reibung auf und sind dabei symmetrisch zu der Längsachse 2 und parallel zu den beiden zweiten Kontaktflächen 24, welche eine hohe Reibung bilden, angeordnet. In einer weiteren bevorzugten Ausgestaltung der Erfindung sind die ersten 14 durch eine Gleitbeschichtung gebildet und in einer weiteren bevorzugten Ausführung mit einer Gleitbeschichtung versehen.

Es ist auch denkbar und möglich, die zweiten Kontaktflächen 24 durch eine Beschichtung zu bilden oder mit einer Beschichtung zu versehen.

In einer weiteren Ausgestaltung der Erfindung sind auf der Innenseite 23 des Führungskastens 1 im Bereich der Unterseite 13 mehr als zwei erste Kontaktflächen 14 und/oder mehr als zwei zweite Kontaktflächen 24 ausgebildet.

In einer weiteren bevorzugten Ausführungsform sind auf der Innenseite 23 der Oberseite 17 mehr als zwei erste Kontaktflächen 14 und/oder mehr als zwei zweite Kontaktflächen 24 ausgebildet.

Für alle angeführten Ausführungsbeispiele gilt, dass die ersten Kontaktflächen 14, in im geöffneten Zustand der Lenksäulenanordnung 4 mit der äußeren Oberfläche des Führungsteils 3 in Kontakt stehen und somit im Kraftfluss der Verschiebekraft F1, F2, F4 angeordnet sind und die zweiten Kontaktflächen 24, stehen im arretierten Zustand der Lenksäulenanordnung 4 mit der äußeren Oberfläche des Führungsteils 3 in Kontakt und sind in dem Kraftfluss der Haltekraft F3, F5 liegend angeordnet sind. Die unterschiedliche Reibung an den Kontaktflächen wird durch ihre Gleitreibungskoeffizientendifferenz bestimmt. Der Gleitreibungskoeffizient ist dabei ein Maß für die Gleitreibungskraft im Verhältnis zur Anpresskraft zwischen zwei Körpern. Die ersten Kontaktflächen 14 weisen Gleitreibungskoeffizienten auf, die kleiner sind als die Gleitreibungskoeffizienten der zweiten Kontaktflächen 24. Vorzugsweise weisen die ersten Kontaktflächen 14 einen ersten Gleitreibungskoeffizienten und die zweiten Kontaktflächen 24 einen zweiten Gleitreibungskoeffizienten auf, wobei der erste Gleitreibungskoeffizient kleiner ist als der zweite Gleitreibungskoeffizient.

Die Gleitreibungsdifferenz wird durch die Oberflächenstruktur und/oder die Beschichtung und/oder mittels eines Zwischenelements hergestellt. Der Führungskasten 1 ist bevorzugt aus einem einzigen Werkstoff gefertigt. Die Gleitreibungsdifferenz kann auch über Schmierstoffe wie beispielsweise Fett, Öl, Wachs oder dergleichen hergestellt werden. Die Differenz zwischen dem zweiten Gleitreibungskoeffizienten und dem ersten Gleitreibungskoeffizienten ist vorzugsweise größer als 0,04.

Alternative Ausführungsbeispiele der Erfindung können abweichend von der beschriebenen Ausführung auch nicht runde Mantelrohre aufweisen. So ist die Erfindung beispielsweise auch anwendbar bei Mantelrohren, bei denen die Oberflächen eine oder mehrere korrespondierende kleine Abflachungen aufweisen, um eine Verdrehsicherung darzustellen. Es sind aber auch andere polygonale oder elliptische oder sonstige nichtrunde Formen denkbar und möglich.

Die Erfindung ist ebenfalls auf Lenksäulenanordnungen mit einem Führungsteil 3 und einem das Führungsteil 3 nur teilweise in Umfangsrichtung umgebenden Führungskasten 1 anwendbar, wobei die beiden Bauteile jeweils Sicken aufweisen, mit denen sie ineinander entlang einer Längsachse führbar gelagert sind. Eine solche Lenksäulenanordnung ist zum Beispiel aus der DE 10 2011 054 606 B3 bekannt.

Die erfindungsmäße Lenksäulenanordnung ist durch die spezielle Anordnung der unterschiedlichen Kontaktflächen zwischen Führungskasten und Führungsteil in einem nicht arretierten Zustand leichtgängig verstellbar und weist zugleich in einem arretierten Zustand eine hohe Steifigkeit auf.

## Patentansprüche

1. Lenksäulenanordnung (4) für ein Kraftfahrzeug
- mit einem Führungsteil (3) zur drehbaren Lagerung einer Lenkspindel (9) um eine Längsachse (2),
- mit einem Führungskasten (1), das an dem Kraftfahrzeug montierbar ist, in dem das Führungsteil (3) entlang der Längsachse (2) verschiebbar angeordnet ist,
- mit einem Klemmsystem (6), das zur Arretierung des Führungsteils (3) in dem Führungskasten (1) ausgebildet ist und umschaltbar ist, zwischen einem arretierten Zustand der Lenksäulenanordnung (4), in dem das Führungsteil (3) gegenüber dem Führungskasten (1) in seiner Position fixiert ist und einem gelösten Zustand der Lenksäulenanordnung (4), in dem das Führungsteil (3) gegenüber dem Führungskasten (1) in Richtung der Längsachse (2) verschiebbar ist,
**dadurch gekennzeichnet, dass** zwischen dem Führungskasten (1) und dem Führungsteil (3) wenigstens zwei Kontaktflächen (14, 24) vorgesehen sind, wobei im gelösten Zustand der Lenksäulenanordnung (4) wenigstens eine erste Kontaktfläche (14) in einem ersten Reibkontakt mit einer Oberfläche des Führungsteils (3) steht, die einer Verschiebung des Führungsteils (3) gegenüber dem Führungskasten (1) entlang der Längsachse (2) entgegenwirkt, und, wobei im arretierten Zustand der Lenksäulenanordnung (4) wenigstens eine zweite Kontaktfläche (24) in einem zweiten Reibkontakt mit einer Oberfläche des Führungsteils (3) steht, wobei eine als Haltekraft (F3, F5) ausgebildete Reibkraft, die zwischen dem Führungskasten (1) und dem Führungsteil (3) im arretierten Zustand des Klemmsystems (6) wirkt, und wobei ein erster Gleitreibungskoeffizient des ersten Reibkontaktes der wenigstens einen ersten Kontaktfläche (14) kleiner ist als ein zweiter Gleitreibungskoeffizient des zweiten Reibkontaktes der wenigstens einen zweiten Kontaktfläche (24).

2. Lenksäulenanordnung nach Anspruch 1, **dadurch gekennzeichnet, dass** die Differenz zwischen dem zweiten Gleitreibungskoeffizienten und dem ersten Gleitreibungskoeffizienten größer als 0,04 ist.

3. Lenksäulenanordnung nach einem der vorhergehenden Ansprüche, **dadurch gekennzeichnet, dass** die Differenz zwischen dem zweiten Gleitreibungskoeffizienten und dem ersten Gleitreibungskoeffizienten größer als 0,13 ist.

4. Lenksäulenanordnung nach einem der vorhergehenden Ansprüche, **dadurch gekennzeichnet, dass** die Differenz zwischen dem zweiten Gleitreibungskoeffizienten und dem ersten Gleitreibungskoeffizienten kleiner oder gleich als 0,2 beträgt.

5. Lenksäulenanordnung nach einem der vorhergehenden Ansprüche, **dadurch gekennzeichnet, dass** der Führungskasten (1) wenigstens eine Ausnehmung (16) zur Aufnahme von einem Zwischenelement (15) aufweist, wobei das Zwischenelement (15) auf einer Innenseite (23) des Führungskastens (1) die wenigstens eine erste Kontaktfläche (14) und/oder die wenigstens eine zweite Kontaktfläche (24) aufweist.

6. Lenksäulenanordnung nach einem der vorhergehenden Ansprüche, **dadurch gekennzeichnet, dass** die wenigstens eine erste Kontaktfläche (14) und/oder die wenigstens eine zweite Kontaktfläche (24) durch eine Gleitbeschichtung des Führungskastens (1) auf einer Innenseite (23) gebildet ist.

7. Lenksäulenanordnung nach einem der vorhergehenden Ansprüche, **dadurch gekennzeichnet, dass** wenigstens eine erste Kontaktfläche (14) in einem Endbereich (11) des Führungskastens (1) zwischen einem lenkradseitigen Ende (12) und dem Klemmsystem (6) in einem Bereich einer Unterseite (13) des Führungskastens (1) liegend angeordnet ist.

8. Lenksäulenanordnung nach einem der vorhergehenden Ansprüche, **dadurch gekennzeichnet, dass** wenigstens eine zweite Kontaktfläche (24) in einem Endbereich (11) des Führungskastens (1) zwischen einem lenkradseitigen Ende (12) und dem Klemmsystem (6) in einem Bereich einer Oberseite (17) des Führungskastens (1) liegend angeordnet ist.

9. Lenksäulenanordnung nach einem der vorhergehenden Ansprüche, **dadurch gekennzeichnet, dass** wenigstens eine erste Kontaktfläche (14) im Bereich einer Oberseite (17) des Führungskastens (1) auf einer lenkradfernen Seite (18) des Klemmsystems (6) liegend angeordnet ist.

10. Lenksäulenanordnung nach einem der vorhergehenden Ansprüche, **dadurch gekennzeichnet, dass** wenigstens eine zweite Kontaktfläche (24) in einem Bereich einer Unterseite (13) des Führungskastens (1) auf einer lenkradfernen Seite (18) des Klemmsystems (6) liegend angeordnet ist.

11. Lenksäulenanordnung nach einem der vorhergehenden Ansprüche, **dadurch gekennzeichnet, dass** der Führungskasten (1) durch ein inneres Mantelrohr und das Führungsteil (3) durch ein äußeres Mantelrohr gebildet ist.

12. Lenksäulenanordnung nach einem der vorhergehenden Ansprüche, **dadurch gekennzeichnet, dass** das Führungsteil (3) wenigstens eine Führungsteilsicke und der Führungskasten (1) wenigstens eine in die wenigstens eine Führungsteilsicke greifende Führungskastensicke aufweist, die eine Führung des Führungsteils (3) entlang der Längsachse (2) in dem Führungskasten (1) ermöglichen, und wobei die wenigstens eine Führungsteilsicke und die wenigstens eine Führungskastensicke mit einer Durchführöffnung zum Hindurchführen eines Spannbolzen des Klemmsystem versehen sind.

13. Lenksäulenanordnung nach einem der vorhergehenden Ansprüche, **dadurch gekennzeichnet, dass** ein Konsolenteil (5) vorgesehen ist, das zur Befestigung des Führungskastens (1) an einer Karossiere des Kraftfahrzeugs ausgebildet ist.

## Claims

1. Steering column arrangement (4) for a motor vehicle
- having a guide part (3) for rotatably mounting a steering spindle (9) about a longitudinal axis (2),
- having a guide bracket (1) which can be mounted on the motor vehicle and in which the guide part (3) is arranged such that it can be displaced along the longitudinal axis (2),
- having a clamping system (6) which is configured for locking the guide part (3) in the guide bracket (1) and can be switched over, between a locked state of the steering column arrangement (4), in which locked state the guide part (3) is fixed in its position with respect to the guide bracket (1), and a released state of the steering column arrangement (4), in which released state the guide part (3) can be displaced in the direction of the longitudinal axis (2) with respect to the guide bracket (1),
**characterized in that** at least two contact faces (14, 24) are provided between the guide bracket (1) and the guide part (3), at least one first contact face (14) being in a first frictional contact with a surface of the guide part (3) in the released state of the steering column arrangement (4), which at least one first contact face (14) counteracts a displacement of the guide part (3) with respect to the guide bracket (1) along the longitudinal axis (2), and at least one second contact face (24) being in a second frictional contact with a surface of the guide part (3) in the locked state of the steering column arrangement (4), a frictional force which is configured as a holding force (F3, F5) and acts between the guide bracket (1) and the guide part (3) in the locked state of the clamping system (6), and a first sliding friction coefficient of the first frictional contact of the at least one first contact face (14) being smaller than a second sliding friction coefficient of the second frictional contact of the at least one second contact face (24).

2. Steering column arrangement according to Claim 1, **characterized in that** the difference between the second sliding friction coefficient and the first sliding friction coefficient is greater than 0.04.

3. Steering column arrangement according to either of the preceding claims, **characterized in that** the difference between the second sliding friction coefficient and the first sliding friction coefficient is greater than 0.13.

4. Steering column arrangement according to one of the preceding claims, **characterized in that** the difference between the second sliding friction coefficient and the first sliding friction coefficient is less than or equal to 0.2.

5. Steering column arrangement according to one of the preceding claims, **characterized in that** the guide bracket (1) comprises at least one recess (16) for receiving an intermediate element (15), the intermediate element (15) comprising the at least one first contact face (14) and/or the at least one second contact face (24) on an inner side (23) of the guide bracket (1).

6. Steering column arrangement according to one of the preceding claims, **characterized in that** the at least one first contact face (14) and/or the at least one second contact face (24) are/is formed by way of a sliding coating of the guide bracket (1) on an inner side (23).

7. Steering column arrangement according to one of the preceding claims, **characterized in that** at least one first contact face (14) is arranged so as to lie in an end region (11) of the guide bracket (1) between a steering wheel-side end (12) and the clamping system (6) in a region of an underside (13) of the guide bracket (1).

8. Steering column arrangement according to one of the preceding claims, **characterized in that** at least one second contact face (24) is arranged so as to lie in an end region (11) of the guide bracket (1) between a steering wheel-side end (12) and the clamping system (6) in a region of an upper side (17) of the guide bracket (1).

9. Steering column arrangement according to one of the preceding claims, **characterized in that** at least one first contact face (14) is arranged so as to lie in the region of an upper side (17) of the guide bracket (1) on a side (18) of the clamping system (6), which side (18) is remote from the steering wheel.

10. Steering column arrangement according to one of the preceding claims, **characterized in that** at least one second contact face (24) is arranged so as to lie in a region of an underside (13) of the guide bracket (1) on a side (18) of the clamping system (6), which side (18) is remote from the steering wheel.

11. Steering column arrangement according to one of the preceding claims, **characterized in that** the guide bracket (1) is formed by way of an inner steering column tube, and the guide part (3) is formed by way of an outer steering column tube.

12. Steering column arrangement according to one of the preceding claims, **characterized in that** the guide part (3) comprises at least one guide part bead, and the guide bracket (1) comprises at least one guide bracket bead which engages into the at least one guide part bead, which beads make guidance of the guide part (3) along the longitudinal axis (2) in the guide bracket (1) possible, and the at least one guide part bead and the at least one guide bracket bead being provided with a leadthrough opening for leading through a clamping bolt of the clamping system.

13. Steering column arrangement according to one of the preceding claims, **characterized in that** a bracket part (5) is provided which is configured to fasten the guide bracket (1) to a vehicle body of the motor vehicle.

## Revendications

1. Agencement de colonne de direction (4) pour un véhicule automobile,
- avec une partie de guidage (3) pour le support rotatif d'un arbre de direction (9) autour d'un axe longitudinal (2),
- avec un caisson de guidage (1), qui peut être monté sur le véhicule automobile, dans lequel la partie de guidage (3) est disposée de façon coulissante le long de l'axe longitudinal (2),
- avec un système de serrage (6), qui est configuré en vue du blocage de la partie de guidage (3) dans le caisson de guidage (1) et qui peut être commuté entre un état bloqué de l'agencement de colonne de direction (4), dans lequel la partie de guidage (3) est fixée dans sa position par rapport au caisson de guidage (1), et un état libéré de l'agencement de colonne de direction (4), dans lequel la partie de guidage (3) est déplaçable dans la direction de l'axe longitudinal (2) par rapport au caisson de guidage (1),
**caractérisé en ce qu'**il est prévu au moins deux faces de contact (14, 24) entre le caisson de guidage (1) et la partie de guidage (3), dans lequel dans l'état libéré de l'agencement de colonne de direction (4) au moins une première face de contact (14) se trouve dans un premier contact de friction avec une surface de la partie de guidage (3), qui s'oppose à un déplacement de la partie de guidage (3) par rapport au caisson de guidage (1) le long de l'axe longitudinal (2), et dans lequel dans l'état bloqué de l'agencement de colonne de direction (4) au moins une deuxième face de contact (24) se trouve dans un deuxième contact de friction avec une surface de la partie de guidage (3), dans lequel une force de friction qui forme une force de retenue (F3, F5) et agit entre le caisson de guidage (1) et la partie de guidage (3) dans l'état bloqué du système de serrage (6), et dans lequel un premier coefficient de friction de glissement du premier contact à friction de ladite au moins une première face de contact (14) est inférieur à un deuxième coefficient de friction de glissement du deuxième contact à friction de ladite au moins une deuxième face de contact (24).

2. Agencement de colonne de direction selon la revendication 1, **caractérisé en ce que** la différence entre le deuxième coefficient de friction de glissement et le premier coefficient de friction de glissement est supérieure à 0,04.

3. Agencement de colonne de direction selon l'une quelconque des revendications précédentes, **caractérisé en ce que** la différence entre le deuxième coefficient de friction de glissement et le premier coefficient de friction de glissement est supérieure à 0,13.

4. Agencement de colonne de direction selon l'une quelconque des revendications précédentes, **caractérisé en ce que** la différence entre le deuxième coefficient de friction de glissement et le premier coefficient de friction de glissement est inférieure ou égale à 0,2.

5. Agencement de colonne de direction selon l'une quelconque des revendications précédentes, **caractérisé en ce que** le caisson de guidage (1) présente au moins un évidement (16) destiné à recevoir un élément intermédiaire (15), dans lequel l'élément intermédiaire (15) présente sur un côté intérieur (23) du caisson de guidage (1) ladite au moins une première face de contact (14) et/ou ladite au moins une deuxième face de contact (24).

6. Agencement de colonne de direction selon l'une quelconque des revendications précédentes, **caractérisé en ce que** ladite au moins une première face de contact (14) et/ou ladite au moins une deuxième face de contact (24) est formée par un revêtement glissant du caisson de guidage (1) sur un côté intérieur (23).

7. Agencement de colonne de direction selon l'une quelconque des revendications précédentes, **caractérisé en ce qu'**au moins une première face de contact (14) est disposée horizontalement dans une région d'extrémité (11) du caisson de guidage (1) entre une extrémité côté volant de direction (12) et le système de serrage (6) dans une région d'un côté inférieur (13) du caisson de guidage (1).

8. Agencement de colonne de direction selon l'une quelconque des revendications précédentes, **caractérisé en ce qu'**au moins une deuxième face de contact (24) est disposée horizontalement dans une région d'extrémité (11) du caisson de guidage (1) entre une extrémité côté volant de direction (12) et le système de serrage (6) dans une région d'un côté supérieur (17) du caisson de guidage (1).

9. Agencement de colonne de direction selon l'une quelconque des revendications précédentes, **caractérisé en ce qu'**au moins une première face de contact (14) est disposée horizontalement dans une région d'un côté supérieur (17) du caisson de guidage (1) sur un côté (18) du système de serrage (6) éloigné du volant de direction.

10. Agencement de colonne de direction selon l'une quelconque des revendications précédentes, **caractérisé en ce qu'**au moins une deuxième face de contact (24) est disposée horizontalement dans une région d'un côté inférieur (13) du caisson de guidage (1) sur un côté (18) du système de serrage (6) éloigné du volant de direction.

11. Agencement de colonne de direction selon l'une quelconque des revendications précédentes, **caractérisé en ce que** le caisson de guidage (1) est formé par un tube d'enveloppe intérieur et la partie de guidage (3) est formée par un tube d'enveloppe extérieur.

12. Agencement de colonne de direction selon l'une quelconque des revendications précédentes, **caractérisé en ce que** la partie de guidage (3) présente au moins une moulure de partie de guidage et le caisson de guidage (1) présente au moins une moulure de caisson de guidage s'engageant dans la moulure de partie de guidage, qui permettent un guidage de la partie de guidage (3) le long de l'axe longitudinal (2) dans le caisson de guidage (1), et dans lequel ladite au moins une moulure de partie de guidage et ladite au moins une moulure de caisson de guidage sont dotées d'une ouverture de passage pour le passage d'un boulon de serrage du système de serrage.

13. Agencement de colonne de direction selon l'une quelconque des revendications précédentes, **caractérisé en ce qu'**il est prévu une partie de console (5), qui est configurée pour la fixation du caisson de guidage (1) à une carrosserie du véhicule automobile.
